# EUROPÄISCHE PATENTANMELDUNG

(11) **EP 2 453 649 A2**
(43) Veröffentlichungstag der Anmeldung: **16.05.2012**
(21) Anmeldenummer: 11009042.0
(22) Anmeldetag: 14.11.2011
(51) Int. Cl.: H04N 5/374, H04N 5/365

(54) **Bildsensor**

(30) Priorität: 15.11.2010 DE 102010051438
(71) Anmelder: Arnold & Richter Cine Technik GmbH & Co. Betriebs KG, 80799 München (DE)
(72) Erfinder: Cieslinski, Michael, 85521 Ottobrunn (DE)
(74) Vertreter: Manitz, Finsterwald & Partner GbR

(57) **Zusammenfassung**

Ein Bildsensor für elektronische Kameras weist ein Bildfeld mit zumindest einem Bildfeldblock auf, das eine Vielzahl von in Zeilen und Spalten angeordneten lichtempfindlichen Pixeln zur Erzeugung von belichtungsabhängigen Pixelsignalen umfasst, wobei die Pixelsignale der Pixel der jeweiligen Spalte des jeweiligen Bildfeldblocks über eine oder mehrere parallel zueinander verlaufende jeweilige Spaltenleitungen auslesbar sind. Der Bildsensor weist ferner wenigstens eine erste Reihe von Spaltenverstärkern und eine zweite Reihe von Spaltenverstärkern für den jeweiligen Bildfeldblock auf. Der Bildsensor ist dazu ausgebildet, die Pixelsignale der Pixel der jeweiligen Spalte des jeweiligen Bildfeldblocks eines Bilds oder zweier aufeinander folgender Bilder teils über die erste Reihe und teils über die zweite Reihe von Spaltenverstärkern auszulesen.

## Beschreibung

Die vorliegende Erfindung betrifft einen Bildsensor, insbesondere einen CMOS-Bildsensor, für elektronische Kameras, insbesondere elektronische Laufbild- bzw. Filmkameras, mit einem Bildfeld insbesondere mit zumindest einem Bildfeldblock, insbesondere zwei Bildfeldblöcken, das eine Vielzahl von in Zeilen und Spalten angeordneten lichtempfindlichen Pixeln zur Erzeugung von belichtungsabhängigen Pixelsignalen umfasst, wobei die Pixelsignale der Pixel der jeweiligen Spalte insbesondere des jeweiligen Bildfeldblocks über eine oder mehrere parallel zueinander verlaufende jeweilige Spaltenleitungen auslesbar sind. Die vorliegende Erfindung betrifft ferner ein entsprechendes Verfahren.

Bei elektronischen Kameras wandeln die lichtempfindlichen Elemente bzw. Pixel durch ein Objektiv der Kamera fallendes Licht in elektrische Signale um. Zum Auslesen eines Bildes wird jedes der Pixel adressiert, wobei ein Pixel einem Bildpunkt des Bildes entspricht. Ein Signal, das zu einer durch eine Belichtung gesammelten Ladung des Pixels proportional ist, wird zu einem Ausgang des Bildsensors geleitet.

Insbesondere sind Bildsensoren bekannt, die für jede Zeile eine eigene Zeilenauswahlleitung und für jede Spalte eine eigene Spaltenleitung aufweisen. Das Auslesen eines solchen Bildsensors erfolgt zeilenweise, d.h. Zeile für Zeile. Hierzu werden mittels der jeweiligen Zeilenauswahlleitung die Pixel der jeweiligen Zeile auf die Spaltenleitungen geschaltet. Jeder der Spaltenleitungen ist ein eigener Spaltenverstärker zugeordnet, um die an den Spaltenleitungen anliegenden Signale der Pixel der ausgewählten Zeile zu verstärken. Die Spaltenverstärker sind dabei in einer unterhalb oder oberhalb des Bildfelds befindlichen Reihe angeordnet. Die verstärkten Signale werden über eine Multiplexereinrichtung zu dem Ausgang oder, falls mehrere Ausgänge vorgesehen sind, wie es zur Erreichung einer hohen Bildrate bevorzugt ist, den Ausgängen des Bildsensors geführt.

Zur Erhöhung der Auflösung der Bildsensoren werden die Pixel des Bildfelds mit jeder neuen Technologie-Generation immer wieder weiter verkleinert. Da die vorgenannten Spaltenverstärker üblicherweise in etwa dieselbe Breite besitzen wie die Pixel, muss mit den kleiner werdenden Pixeln auch die Breite der Spaltenverstärker entsprechend abnehmen.

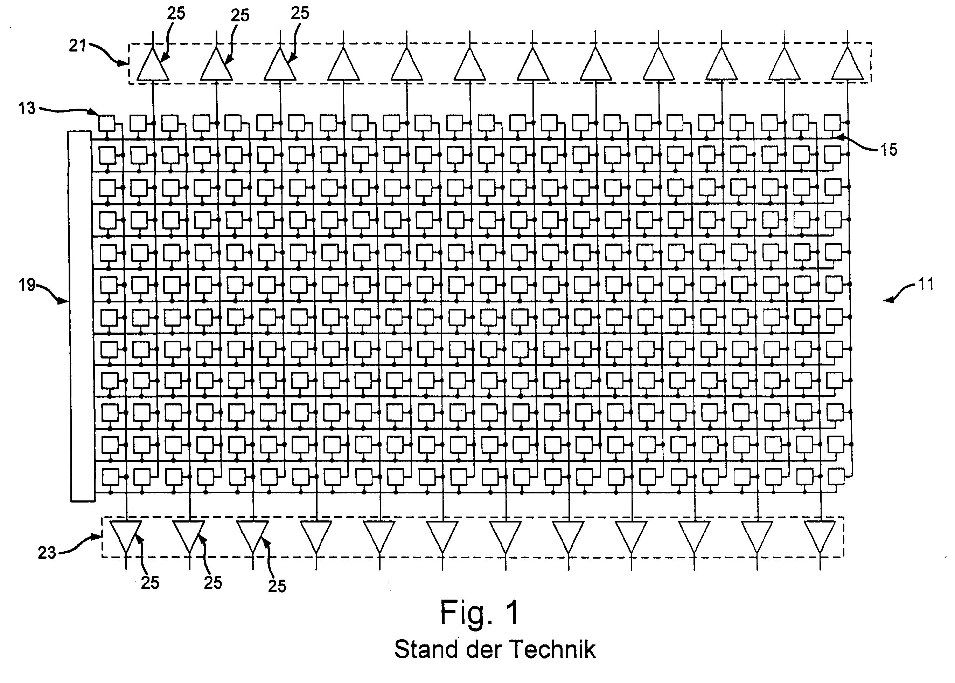

Sofern dies nicht möglich oder nachteilig ist, kann gemäß Fig. 1 ein Bildsensor mit wenigstens einer an einer ersten Seite des Bildfelds 11 angeordneten Reihe 21 von Spaltenverstärkern 25, insbesondere zwei oder mehr derartigen Reihen 21, und wenigstens einer an einer zweiten Seite des Bildfelds 11 angeordneten derartigen Reihe 23, insbesondere zwei oder mehr derartigen Reihen 23, ausgestattet werden, wobei das Bildfeld 11 mit den Pixeln 13 zwischen der ersten Reihe 21 und der zweiten Reihe 23 angeordnet ist. Die Spaltenverstärker 25 können dann in der Reihe 21 oberhalb des Bildfelds 11 und in der Reihe 23 unterhalb des Bildfelds 11 angeordnet werden, und die Spaltenleitungen 17 können dann abwechselnd nach oben und nach unten zu der jeweiligen Reihe 21, 23 von Spaltenverstärkern 25 geführt werden. Bei einer derartigen Anordnung kann die Breite der Spaltenverstärker 25 dann doppelt so groß sein wie die Breite der Pixel 13. Der Vollständigkeit halber ist in Fig. 1 auch noch eine Zeilen-Adressierlogik 19 gezeigt.

Bei einem Bildsensor, der für die jeweilige Spalte mehrere parallel zueinander verlaufende Spaltenleitungen aufweist, beispielsweise zwei oder vier, um eine höhere Auslesegeschwindigkeit zu erreichen, kann eine entsprechende Vergrößerung der maximal möglichen Breite der Spaltenverstärker erreicht werden.

Um mit dem Bildsensor einen hohen Dynamikbereich zu erreichen, sind die Pixel und Spaltenverstärker äußerst rauscharm und damit aber auch besonders empfindlich ausgelegt. Dadurch führt bereits eine kleine Signalverfälschung oder Signalabweichung zu einer verfälschten oder abweichenden Helligkeit des dem jeweiligen verstärkten Signal entsprechenden Bildpunkts. Eine derartige Störung oder Abweichung ist, sofern sie zufällig und nur punktweise auftritt, mit dem Auge jedoch nicht wahrnehmbar.

Wenn die Signalverfälschung oder Signalabweichung jedoch systematisch durch einen der Spaltenverstärker verursacht wird, tritt die Störung oder Abweichung bei allen Pixeln der dem jeweiligen Spaltenverstärker zugeordneten Spalte des Bildsensors und damit bei allen Bildpunkten der entsprechenden Spalte des Bildes auf, so dass im Bild ein vertikaler Streifen entsteht, der mit dem Auge wahrnehmbar ist. Ein vertikaler Streifen kann unabhängig davon entstehen, ob eine oder mehrere Reihen von Spaltenverstärkern vorgesehen sind, oder ob bei mehreren Reihen diese auf derselben Seite oder - wie auch immer verteilt - auf verschiedenen Seiten des Bildfelds angeordnet sind.

Bei einem Bildsensor mit den erläuterten beiden Reihen von Spaltenverstärkern werden die Spaltenverstärker der oberen Reihe in ihren elektrischen Eigenschaften wie Offsetspannung und Verstärkung in der Regel zumindest geringfügig von den Spaltenverstärkern der unteren Reihe abweichen. Diese Abweichung wird dadurch verursacht, dass die genannten Eigenschaften der Spaltenverstärker von verschiedenen Einflussgrößen wie beispielsweise Temperatur, Spannungsversorgung und Fertigungstoleranzen abhängig sind und damit eine relativ starke Ortsabhängigkeit aufweisen. Derartige Abweichungen sind dabei umso stärker ausgeprägt, je weiter die Spaltenverstärker voneinander entfernt sind, d.h. verstärkten Signale der oberen Reihe von Spaltenverstärkern einerseits und die verstärkten Signalen der unteren Reihe von Spaltenverstärkern andererseits werden systematisch voneinander abweichen. Diese Abweichung wird im Bild als unterschiedliche Helligkeit sichtbar. Wird nun das Bild von der einen Reihe von Spaltenverstärkern heller dargestellt, sind alle ungeraden Spalten heller als alle geraden Spalten, oder umgekehrt. Dies führt zu vertikalen Helligkeitsstreifen bzw. einem Streifenmuster im Bild.

Bei Bildsensoren, die als Farbsensoren ausgebildet sind, d.h. beispielsweise mit einer Farbfilteranordnung mit Bayer-Muster versehen sind, liegen blau-empfindliche Pixel und rot-empfindliche Pixel in benachbarten Spalten abwechselnd nebeneinander. Bei einem Farbsensor führt das vorgenannte Streifenmuster daher zu entsprechenden Farbabweichungen im Bild.

Der Erfindung liegt die Aufgabe zugrunde, einen Bildsensor der eingangs genannten Art anzugeben, bei welchem ein Streifenmuster oder ein vertikaler Streifen nicht entsteht oder zumindest die Wahrnehmbarkeit eines Streifenmusters oder eines vertikalen Streifens vermindert ist.

Diese Aufgabe wird durch einen Bildsensor mit den Merkmalen des Anspruchs 1 gelöst, und insbesondere dadurch, dass wenigstens eine erste Reihe von Spaltenverstärkern und eine zweite Reihe von Spaltenverstärkern insbesondere für den jeweiligen Bildfeldblock vorgesehen ist und der Bildsensor dazu ausgebildet ist, die Pixelsignale der Pixel der jeweiligen Spalte insbesondere des jeweiligen Bildfeldblocks eines Bilds oder zweier aufeinander folgender Bilder teils über die erste Reihe und teils über die zweite Reihe von Spaltenverstärkern auszulesen.

Es kann bevorzugt sein, wenn die wenigstens eine erste Reihe von Spaltenverstärkern und eine zweite Reihe von Spaltenverstärkern wenigstens eine, insbesondere genau eine oder genau zwei an einer ersten Seite des Bildfelds angeordnete Reihen von Spaltenverstärkern und wenigstens eine, insbesondere genau eine oder zwei an einer zweiten Seite des Bildfelds angeordnete Reihen von Spaltenverstärkern umfassen.

Erfindungsgemäß ist es also möglich, zum Auslesen der Pixelsignale der Pixel der jeweiligen Spalte insbesondere des jeweiligen Bildfeldblocks die erste Reihe und die zweite Reihe zu verwenden. Die Pixelsignale der Pixel der jeweiligen Spalte insbesondere des jeweiligen Bildfeldblocks eines Bilds oder zweier aufeinander folgender Bilder müssen daher nicht alle durch dieselbe Reihe von Spaltenverstärkern bzw. nicht durch einen Spaltenverstärker aus lediglich einer Reihe von Spaltenverstärkern verstärkt werden. Hierdurch kann erreicht werden, dass die durch einen Spaltenverstärker einer Reihe verursachten Abweichungen nicht mehr die gesamte "Spalte" eines Bilds bzw. den dem jeweiligen Bildfeldblock zugehörigen Teil der "Spalte" eines Bilds betreffen (sondern nur noch einen Teil der Pixel der jeweiligen Spalte insbesondere des jeweiligen Bildfeldblocks, da der andere Teil der Pixel der jeweiligen Spalte insbesondere des jeweiligen Bildfeldblocks durch einen Spaltenverstärker der anderen Reihe ausgelesen wird) bzw. der vorgenannte Streifen insbesondere in dem jeweiligen Bildfeldblock allenfalls in einem der beiden aufeinander folgenden Bilder entsteht.

Bei einem Bildsensor, der zwei Spaltenleitungen pro Spalte umfasst, können zwei Bildzeilen gleichzeitig ausgelesen werden. Insbesondere entspricht die Anzahl der Spaltenverstärker der ersten Reihe und/oder die Anzahl der Spaltenverstärker der zweiten Reihe der Anzahl der Pixel einer Zeile, d.h. die Anzahl der Spaltenverstärker der beiden Reihen ist doppelt so groß wie die Anzahl der Pixel einer Zeile. In diesem Fall ist es vorteilhaft, aus den beiden Spaltenleitungen, die einer jeweiligen Spalte zugeordnet sind, eine Spaltenleitung für eine Verarbeitung in der ersten Reihe und eine Spaltenleitung für eine Verarbeitung in der zweiten Reihe auszuwählen bzw. fest vorzugeben. Ein Bildsensor kann aber auch mehr als zwei Spaltenleitungen pro Spalte, beispielsweise vier Spaltenleitungen pro Spalte, umfassen.

Umfasst das Bildfeld lediglich einen Bildfeldblock, kann es bevorzugt sein, wenn das Bildfeld zwischen der ersten Reihe und der zweiten Reihe angeordnet ist und/oder an der ersten Seite des Bildfelds und an der zweiten Seite des Bildfelds jeweils genau eine Reihe von Spaltenverstärkern angeordnet ist. Umfasst das Bildfeld mehrere Bildfeldblöcke, insbesondere zwei Bildfeldblöcke, ist es bevorzugt, wenn die erste Reihe und die zweite Reihe des jeweiligen Bildfeldblocks an derselben Seite des Bildfelds angeordnet sind. Die Bildfeldblöcke können fingerartig ineinandergreifen. Insbesondere ist ein jeweiliger Bildfeldblock durch eine jeweilige Gruppe von zusammenhängenden Pixeln gegeben, die über im Bereich des jeweiligen Bildfeldblocks durchgehende und/oder ununterbrochene Spaltenleitungen über wenigstens eine der beiden Seiten des Bildfelds auslesbar sind. Insbesondere erstreckt sich der jeweilige Bildfeldblock über sämtliche Spalten und/oder von der ersten bis zu letzten Spalte.

Grundsätzlich können für einen jeweiligen Bildfeldblock und/oder für eine jeweilige Bildfeldseite auch mehr als zwei Reihen von Spaltenverstärkern vorgesehen sein. Der Bildsensor ist dann dazu ausgebildet ist, die Pixelsignale der Pixel der jeweiligen Spalte insbesondere des jeweiligen Bildfeldblocks eines oder zweier aufeinander folgender Bilder jeweils teils über jede der Reihen auszulesen.

Nach einer Ausbildung der Erfindung ist eine Schalteinrichtung vorgesehen, die dazu ausgebildet ist, zum Auslesen der Pixelsignale der Pixel der jeweiligen Spalte insbesondere des jeweiligen Bildfeldblocks die jeweilige Spaltenleitung wahlweise auf eine der Reihen, insbesondere die erste Reihe oder die zweite Reihe, zu schalten, wobei zusätzlich eine Steuereinrichtung zum Steuern der Schalteinrichtung vorgesehen ist. Hierdurch ist es insbesondere möglich, die Pixelsignale der Pixel einer Spalte insbesondere des jeweiligen Bildfeldblocks eines Bildes, die gleichzeitig an der oder den Spaltenleitungen der jeweiligen Spalte insbesondere des jeweiligen Bildfeldblocks anliegen, entweder auf einen Spaltenverstärker der ersten Reihe oder einen Spaltenverstärker der zweiten Reihe zu schalten.

Anstelle eines Streifenmusters kann daher ein Punktemuster erzeugt werden. Somit ist ein "Verwürfeln" der vertikalen Störungen bzw. Abweichungen möglich. Da das menschliche Auge bei gleicher Abweichung der Spaltenverstärker der beiden Reihen voneinander ein Punktemuster bei weitem nicht so gut erkennen kann wie ein Streifenmuster - die Erkennbarkeit eines Punktemusters beträgt in etwa lediglich ein Fünftel der Erkennbarkeit eines Linienmusters - kann die subjektive Bildqualität erheblich verbessert werden. Auch ein vertikaler Streifen kann hierdurch verwürfelt werden.

Insbesondere kann die Steuereinrichtung dazu ausgebildet sein, die Schalteinrichtung derart zu steuern, dass die Aufschaltzuordnung der Spaltenleitungen auf die insbesondere beiden Reihen von einer Zeile zur nächsten Zeile oder von Zeile zu Zeile insbesondere zufällig oder quasi-zufällig variiert. Die Verteilung der Pixel einer Spalte insbesondere des jeweiligen Bildfeldblocks auf die Reihen, insbesondere die erste Reihe und die zweite Reihe, ist dabei bevorzugt derart realisiert oder gewählt, dass kein regelmäßiges Muster entsteht.

Grundsätzlich kann eine Vielzahl von möglichen Aufschaltzuordnungen der Spaltenleitungen auf die insbesondere beiden Reihen vorgegeben sein, aus der die Aufschaltzuordnung für die jeweilige Zeile ausgewählt wird. Die ausgewählte Aufschaltzuordnung kann dann von einer Zeile zur nächsten Zeile oder von Zeile zu Zeile variiert werden. Es ist es jedoch auch möglich, dass die jeweilige Aufschaltzuordnung durch einen Zufallsgenerator generiert wird.

Die Spaltenleitungen können in mehrere Spaltenleitungsgruppen, insbesondere Spaltenleitungspaare, unterteilt sein, wobei die jeweilige Spaltenleitungsgruppe, mehrere, insbesondere zwei, insbesondere nebeneinander angeordnete Spaltenleitungen umfasst, wobei jede der Spaltenleitungen der jeweiligen Spaltenleitungsgruppe auf jede der Reihen, insbesondere die erste Reihe und die zweite Reihe, schaltbar ist, und wobei die Steuereinrichtung dazu ausgebildet ist, die Schalteinrichtung derart zu steuern, dass jede der Spaltenleitungen der jeweiligen Spaltenleitungsgruppe auf eine eigene der Reihen, insbesondere die eine der beiden Spaltenleitungen des jeweiligen Spaltenleitungspaars auf die erste Reihe und die andere der beiden Spaltenleitungen des jeweiligen Spaltenleitungspaars auf die zweite Reihe, geschaltet wird. Bei den insbesondere beiden Spaltenleitungen der jeweiligen Spaltenleitungsgruppe, insbesondere des jeweiligen Spaltenleitungspaars, kann es sich um insbesondere zwei Spaltenleitungen einer jeweiligen Spalte oder um insbesondere zwei Spaltenleitungen insbesondere zweier verschiedener jeweiliger Spalten handeln.

Hierfür kann die Schalteinrichtung pro Spaltenleitungsgruppe, insbesondere Spaltenleitungspaar, einen zwischen dem Bildfeld und der ersten Reihe angeordneten ersten Wechselschalter und einen zwischen dem Bildfeld und der zweiten Reihe angeordneten zweiten Wechselschalter oder einen zwischen dem Bildfeld und den an derselben Seite des Bildfelds angeordneten insbesondere beiden Reihen angeordneten Kreuzschalter umfassen. Durch einen Kreuzschalter können die auf den insbesondere beiden Spaltenleitungen der jeweiligen Spaltenleitungsgruppe anliegenden Pixelsignale unverändert parallel weitergeführt oder über Kreuz vertauscht werden.

Bevorzugt sind der jeweiligen Spaltenleitungsgruppe, insbesondere dem jeweiligen Spaltenleitungspaar, ein eigener Spaltenverstärker aus einer jeden der Reihen, insbesondere ein eigener Spaltenverstärker aus der ersten Reihe und ein eigener Spaltenverstärker aus der zweiten Reihe, zugeordnet.

Die Spaltenleitungen können in mehrere Spaltenleitungseinheiten unterteilt sein, wobei die jeweilige Spaltenleitungseinheit mehrere insbesondere nebeneinander angeordnete Spaltenleitungen oder Spaltenleitungsgruppen, insbesondere Spaltungsleitungspaare, umfasst. Bevorzugt ist die innerhalb einer Spaltenleitungseinheit vorliegende Aufschaltzuordnung der Spaltenleitungen auf die insbesondere beiden Reihen für die mehreren Spaltenleitungseinheiten identisch. Die Steuereinrichtung kann insbesondere in diesem Fall dann mehrere Steuerleitungen umfassen, wobei die jeweilige Steuerleitung einer jeweiligen Spaltenleitung oder einer jeweiligen Spaltenleitungsgruppe, insbesondere einem jeweiligen Spaltenleitungspaar, aus einer jeden Spaltenleitungseinheit zugeordnet ist. Hierdurch kann die Schalteinrichtung und/oder die Steuereinrichtung bzw. die Steuerung der Schalteinrichtung vereinfacht werden.

Alternativ oder zusätzlich ist die Steuereinrichtung dazu ausgebildet, die Schalteinrichtung derart zu steuern, dass die Aufschaltzuordnung der Spaltenleitungen auf die insbesondere beiden Reihen von einem Bild zum nächsten Bild oder von Bild zu Bild variiert. Grundsätzlich ist es hierbei möglich, dass die jeweilige Spalte bzw. der dem jeweiligen Bildfeldblock zugehörige Teil der Spalte nur über eine der insbesondere beiden Reihen ausgelesen wird, so dass in einem Bild das vorgenannte Streifenmuster bzw. der vorgenannte vertikale Streifen weiterhin vorhanden sein kann. Wird das Streifenmuster bzw. der vertikale Streifen für das nächste Bild bzw. von Bild zu Bild verändert, beispielsweise invertiert, liegt - über die Zeit gemittelt - für alle Spalten bzw. Teile hiervon dieselbe mittlere Helligkeit vor, so dass Abweichungen in den Eigenschaften der Spaltenverstärker der insbesondere beiden Reihen voneinander nicht wahrgenommen werden. Beispielsweise können für ein Bild die geraden Spalten bzw. die Teile hiervon durch die erste Reihe und die ungeraden Spalten bzw. die Teile hiervon durch die zweite Reihe ausgelesen werden, oder umgekehrt, und für das nächste Bild kann diese Zuordnung gerade umgekehrt werden. Es werden also die Pixelsignale der jeweiligen Spalte bzw. des Teils hiervon zweier aufeinander folgender Bilder teils (nämlich die Pixelsignale der jeweiligen Spalte bzw. des Teils hiervon des ersten der beiden Bilder) über die erste Reihe und teils (nämlich die Pixelsignale der jeweiligen Spalte bzw. des Teils hiervon des zweiten der beiden Bilder) über die zweite Reihe ausgelesen. Die Variation von einem Bild zum nächsten Bild bzw. von Bild zu Bild kann aber auch mit der vorgenannten Verwürfelung innerhalb eines Bilds kombiniert werden, wie es bevorzugt ist, so dass die Wahrnehmbarkeit der Abweichungen der Spaltenverstärker einer, insbesondere der ersten Reihe von den Spaltenverstärkern einer anderen, insbesondere der zweiten Reihe besonders gering ist.

Nach einer anderen Ausbildung der Erfindung ist bei mehreren Spaltenleitungen einer jeweiligen Spalte die Aufschaltzuordnung der Spaltenleitungen auf die insbesondere beiden Reihen fest vorgegeben, wobei insbesondere die Pixel der jeweiligen Spalte zufällig, quasi-zufällig oder alternierend den Reihen, insbesondere der ersten Reihe und der zweiten Reihe, zugeordnet sind. Die feste Vorgabe kann beispielsweise durch eine feste Verdrahtung realisiert sein. Auch hierdurch kann die vorgenannte Verwürfelung erreicht werden. Die vorgenannte Schalteinrichtung bzw. die vorgenannte Steuereinrichtung ist in diesem Fall nicht erforderlich.

Insbesondere sind die Spaltenleitungen dabei in mehrere Spaltenleitungsgruppen, insbesondere Spaltenleitungspaare, unterteilt, wobei es sich bei den insbesondere beiden Spaltenleitungen der jeweiligen Spaltenleitungsgruppe um insbesondere zwei Spaltenleitungen einer jeweiligen Spalte handelt, und wobei die Aufschaltzuordnung der Spaltenleitungen auf die insbesondere beiden Reihen von einer Spaltenleitungsgruppe zur nächsten Spaltenleitungsgruppe oder von Spaltenleitungsgruppe zu Spaltenleitungsgruppe und/oder von einer Spalte zur nächsten Spalte oder von Spalte zu Spalte variiert, insbesondere invertiert ist.

Bevorzugt entspricht die Anzahl der Spaltenverstärker der Anzahl der Spaltenleitungen. Hierdurch können alle Pixel einer Zeile gleichzeitig aus dem Bildfeld ausgelesen werden. Grundsätzlich ist es jedoch auch möglich, dass weniger Spaltenverstärker vorgesehen sind als Spalten bzw. Spaltenleitungen, so dass ein jeweiliger Spaltenverstärker mehreren Spalten bzw. Spaltenleitungen zugeordnet ist. Darüber hinaus ist es bevorzugt, wenn für die Reihen die Anzahl der Spaltenverstärker in den Reihen identisch ist, insbesondere die Anzahl der Spaltenverstärker in der ersten Reihe der Anzahl der Spaltenverstärker in der zweiten Reihe entspricht. Aufgrund dieser Gleichverteilung kann bei gegebener Breite des Bildfelds die Breite der Spaltenverstärker maximiert werden.

Insbesondere ist bei einem Bildsensor, der für die jeweilige Spalte insbesondere des jeweiligen Bildfeldblocks mehrere parallel zueinander verlaufende Spaltenleitungen aufweist, das jeweilige Pixel der jeweiligen Spalte insbesondere des jeweiligen Bildfeldblocks lediglich mit einer der mehreren Spaltenleitungen verbunden bzw. verbindbar.

Fällt bei dem Bildsensor eine Spaltenleitung durch Defekt aus, ist es bevorzugt, wenn die Pixelwerte der der jeweiligen ausgefallenen Spaltenleitung zugeordneten Pixel aus den Pixelwerten jeweiliger benachbarter Pixel interpoliert werden können. Insbesondere deshalb ist es bevorzugt, wenn in einer jeweiligen Spalte insbesondere eines jeweiligen Bildfeldblocks unmittelbar aufeinanderfolgende Pixel paarweise abwechselnd mit den mehreren Spaltenleitungen verbunden bzw. verbindbar sind. Bei einem Farbsensor, beispielsweise mit Bayer-Muster, kann hierdurch erreicht werden, dass bei Ausfall einer Spaltenleitung eine Farbe (z.B. rot oder blau) nicht für die gesamte jeweilige Spalte bzw. den Teil hiervon fehlt. Hierdurch kann die Interpolation der Pixelwerte der ausgefallenen Pixel vereinfacht werden.

Insbesondere betrifft die vorliegenden Erfindung einen Bildsensor, insbesondere CMOS-Bildsensor, für elektronische Kameras, mit einem Bildfeld, das eine Vielzahl von in Zeilen und Spalten angeordneten lichtempfindlichen Pixeln zur Erzeugung von belichtungsabhängigen Pixelsignalen umfasst, wobei die Pixelsignale der Pixel der jeweiligen Spalte über eine oder mehrere parallel zueinander verlaufende jeweilige Spaltenleitungen auslesbar sind, und mit einer ersten Reihe von Spaltenverstärkern und einer zweiten Reihe von Spaltenverstärkem, wobei das Bildfeld zwischen der ersten Reihe und der zweiten Reihe angeordnet ist, wobei der Bildsensor dazu ausgebildet ist, die Pixelsignale der Pixel der jeweiligen Spalte eines oder zweier aufeinander folgender Bilder teils über die erste Reihe und teils über die zweite Reihe auszulesen.

Die Erfindung betrifft ferner einen Bildsensor für elektronische Kameras, umfassend: ein Bildfeld, das eine Vielzahl von in Zeilen und Spalten angeordneten lichtempfindlichen Pixeln zur Erzeugung von belichtungsabhängigen Pixelsignalen aufweist; mehrere Spaltenleitungen für jede Spalte von Pixeln, wobei ein jedes Pixel der jeweiligen Spalte lediglich mit einer der mehreren Spaltenleitungen verbunden oder verbindbar ist; wenigstens eine erste Reihe von Spaltenverstärkern und eine zweite Reihe von Spaltenverstärkern, die auf gegenüberliegenden Seiten des Bildfelds angeordnet sind; und eine Schalteinrichtung, die dazu ausgebildet ist, zum Auslesen der Pixelsignale der Pixel einer jeweiligen Spalte die jeweilige Spaltenleitung wahlweise auf die erste Reihe oder die zweite Reihe von Spaltenverstärkern zu schalten.

Vorzugsweise besitzt ein solcher Bildsensor ferner eine Steuereinrichtung zum Steuern der Schalteinrichtung, wobei die Spaltenleitungen in mehrere Spaltenleitungseinheiten unterteilt sind, wobei die jeweilige Spaltenleitungseinheit die Spaltenleitungen mehrerer Spalten von Pixeln umfasst, und wobei die Steuereinrichtung dazu ausgebildet ist, für jede Spaltenleitungseinheit eine Aufschaltzuordnung vorzusehen, gemäß welcher die Spaltenleitungen der jeweiligen Spaltenleitungseinheit wahlweise auf die erste Reihe oder die zweite Reihe von Spaltenverstärkern schaltbar sind. Die Steuereinrichtung kann mehrere Steuerleitungen umfassen, wobei jede Steuerleitung einer jeweiligen Spaltenleitung einer jeden Spaltenleitungseinheit oder einer jeweiligen Gruppe von Spaltenleitungen einer jeden Spaltenleitungseinheit zugeordnet ist. Vorzugsweise weist die Schalteinrichtung in diesem Fall eine Vielzahl von Wechselschaltern auf, wobei jeder Spaltenleitungseinheit mehrere Wechselschalter zugeordnet sind, um eine jeweilige Spaltenleitung der jeweiligen Spaltenleitungseinheit wahlweise auf die erste Reihe oder die zweite Reihe von Spaltenverstärkern zu schalten, und jede Steuerleitung ist mit einem jeweiligen Wechselschalter einer jeden Spaltenleitungseinheit verbunden, um den jeweiligen Wechselschalter zu steuern.

Weiterhin ist es für einen solchen Bildsensor bevorzugt, dass die Aufschaltzuordnungen der mehreren Spaltenleitungseinheiten identisch sind. Ferner kann die Steuereinrichtung angepasst sein, die Schalteinrichtung derart zu steuern, dass die Aufschaltzuordnung der Spaltenleitungen auf die erste Reihe und die zweite Reihe von Spaltenverstärkern von einem Bild zum nächsten Bild und/oder von einer Zeile zur nächsten Zeile von Pixeln variiert.

Die Erfindung betrifft weiterhin ein dem jeweiligen erfindungsgemäßen Bildsensor entsprechendes Verfahren, insbesondere ein Verfahren zum Auslesen eines Bildsensors, insbesondere eines CMOS-Bildsensors, für elektronische Kameras, wobei der Bildsensor ein Bildfeld insbesondere mit zumindest einem Bildfeldblock, das eine Vielzahl von in Zeilen und Spalten angeordneten lichtempfindlichen Pixeln zur Erzeugung von belichtungsunabhängigen Pixelsignalen umfasst, und wenigstens eine erste Reihe von Spaltenverstärkern und eine zweite Reihe von Spaltenverstärkern aufweist, wobei die Pixelsignale der Pixel der jeweiligen Spalte insbesondere des jeweiligen Bildfeldblocks über eine oder mehrere parallel zueinander verlaufende jeweilige Spaltenleitungen ausgelesen werden, und wobei die Pixelsignale der Pixel der jeweiligen Spalte insbesondere des jeweiligen Bildfeldblocks eines Bilds oder zweier aufeinander folgender Bilder teils über die erste Reihe und teils über die eine zweite Reihe ausgelesen werden.

Bevorzugte Ausführungsformen des vorgenannten Bildsensors und des erfindungsgemäßen Verfahrens ergeben sich in analoger Weise aus den bevorzugten Ausgestaltungen des erfindungsgemäßen Bildsensors.

Nicht beschränkende Ausführungsbeispiele der Erfindung sind in der Zeichnung dargestellt und werden nachfolgend beschrieben.

Es zeigen, jeweils in schematischer Darstellung,
- Fig. 1: einen Bildsensor gemäß einer nicht beanspruchten Ausführungsform,
- Fig. 2: einen Bildsensor gemäß einer ersten erfindungsgemäßen Ausführungsform,
- Fig. 3: einen Bildsensor gemäß einer zweiten erfindungsgemäßen Ausführungsform,
- Fig. 4: einen Bildsensor gemäß einer dritten erfindungsgemäßen Ausführungsform,
- Fig. 5: einen Bildsensor gemäß einer vierten erfindungsgemäßen Ausführungsform,
- Fig. 6: einen Bildsensor gemäß einer fünften erfindungsgemäßen Ausführungsform,
- Fig. 7: einen Bildsensor gemäß einer sechsten erfindungsgemäßen Ausführungsform, und
- Fig. 8: einen Bildsensor gemäß einer siebten erfindungsgemäßen Ausführungsform.

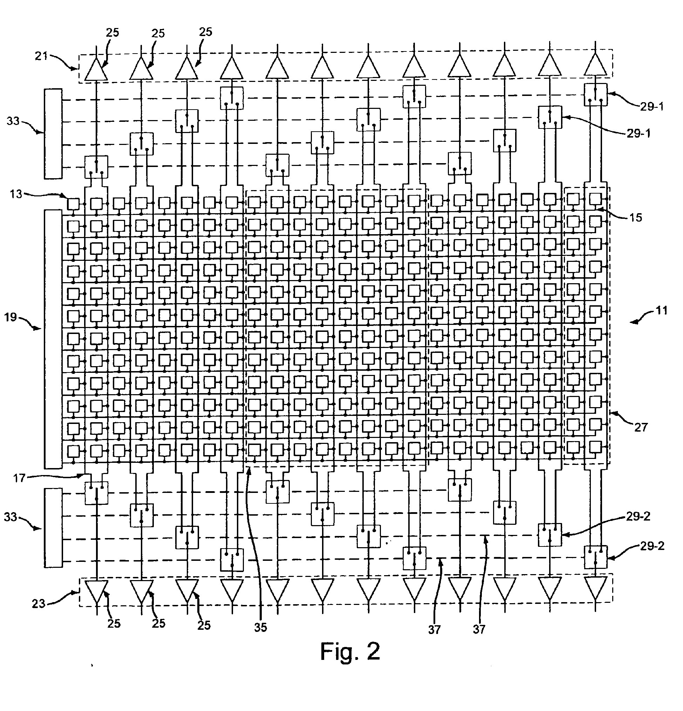

Der in Fig. 2 dargestellte Bildsensor einer elektronischen Laufbildkamera umfasst ein Bildfeld 11, das aus einer Vielzahl von Pixeln 13 gebildet ist, die entlang Zeilen und Spalten angeordnet sind. Die Größe des Bildfelds ist lediglich beispielhaft gewählt. Für jede Zeile ist eine eigene Zeilenauswahlleitung 15 vorgesehen, für jede Spalte eine eigene Spaltenleitung 17. Das Auslesen des Bildsensors erfolgt zeilenweise. Hierzu werden mittels der jeweiligen Zeilenauswahlleitung 15 die Pixel 13 der jeweiligen Zeile auf die jeweils von der ersten bis zur letzten Zeile durchgehenden Spaltenleitungen 17 geschaltet. Das Bildfeld 11 bildet einen Bildfeldblock im Sinne der vorliegenden Anmeldung. Zur Adressierung der der jeweils auszulesenden Zeile zugeordneten Zeilenauswahlleitung 15 ist eine Zeilen-Adressierlogik 19 vorgesehen.

Oberhalb und unterhalb des Bildfelds 11 ist jeweils eine Reihe 21, 23 von Spaltenverstärkern 25 vorgesehen. Die erste Reihe 21 und die zweite Reihe 23 verlaufen jeweils parallel zu den Zeilen des Bildfelds 11. Die Spaltenverstärker 25 dienen dazu, die an den Spaltenleitungen 17 anliegenden Signale der Pixel 13 der ausgewählten Zeile zu verstärken. Hierzu ist dem jeweiligen Spaltenverstärker 25 eine nicht dargestellte Sampleand-Hold-Schaltung vorgeschaltet, die die Ausgangsspannung des jeweiligen Pixels 11 auf einem konstanten Wert hält. Bevorzugt handelt es sich bei den Spaltenverstärkern 25 um Differenzverstärker und es findet im Betrieb eine korrelierte Doppelabtastung (correlated double sampling) statt, d.h. es wird zur Unterdrückung des thermischen Rauschens des Bildsensors neben dem eigentlichen Signal zusätzlich ein Referenzsignal ausgelesen. Die durch die Spaltenverstärker 25 der beiden Reihen 21, 23 verstärkten Signale werden dann über eine jeweilige obere bzw. untere nicht dargestellte Multiplexereinrichtung zu wenigstens einem oberen und bzw. unteren nicht dargestellten Ausgang des Bildsensors geführt.

Jeweils zwei nebeneinander angeordnete Spaltenleitungen 17 bilden ein Spaltenleitungspaar 27, wobei jede Spaltenleitung 17 lediglich einem Spaltenleitungspaar 27 zugeordnet ist. Jedem Spaltenleitungspaar 27 ist ein eigener Spaltenverstärker 25 aus der ersten Reihe 21 und ein eigener Spaltenverstärker 25 aus der zweiten Reihe 23 zugeordnet, so dass insgesamt die Anzahl der Spaltenverstärker 25 der Anzahl der Spaltenleitungen 17 und die Anzahl der Spaltenverstärker 25 in der ersten Reihe 21 der Anzahl der Spaltenverstärker 25 in der zweiten Reihe 23 entspricht.

Darüber hinaus umfasst der Bildsensor eine Schalteinrichtung, die eine Vielzahl von Wechselschaltern 29 umfasst, wobei die Anzahl der Wechselschalter 29 der Anzahl der Spaltenleitungen 17 oder der Anzahl der Spaltenverstärker 25 entspricht. Insbesondere sind jedem Spaltenleitungspaar 27 ein erster Wechselschalter 29-1 und ein zweiter Wechselschalter 29-2 zugeordnet. Der erste Wechselschalter 29-1 ist zwischen den beiden Spaltenleitungen 17 des jeweiligen Spaltenleitungspaars 27 und einem jeweiligen Spaltenverstärker 25 der ersten Reihe 21 angeordnet. Der zweite Wechselschalter 29-2 ist zwischen den beiden Spaltenleitungen 17 des jeweiligen Spaltenleitungspaars 27 und einem jeweiligen Spaltenverstärker 25 der zweiten Reihe 23 angeordnet. Über den ersten Wechselschalter 29-1 und den zweiten Wechselschalter 29-2 ist jede der beiden Spaltenleitungen 17 des jeweiligen Spaltenleitungspaars 27 auf die erste Reihe 21 und die zweite Reihe 23 schaltbar.

Ferner ist eine Steuereinrichtung 33 vorgesehen, die dazu ausgebildet ist, die Wechselschalter 29 derart zu steuern, dass wahlweise die eine der Spaltenleitungen 17 des jeweiligen Spaltenleitungspaars 27 auf die erste Reihe 21 von Spaltenverstärkern 25 und die andere der beiden Spaltenleitungen 17 auf die zweite Reihe 23 oder die eine der beiden Spaltenleitungen 17 des jeweiligen Spaltenleitungspaars 27 auf die zweite Reihe 23 und die andere der beiden Spaltenleitungen 17 auf die erste Reihe 21 geschaltet wird, um die beiden Pixel 13 der jeweiligen Zeile des jeweiligen Spaltenleitungspaars 27 auszulesen.

Über die Wechselschalter 29 wird also ermöglicht, die Pixel 13 einer Spalte entweder über einen Spaltenverstärker 25 der oberen Reihe 21 oder über einen Spaltenverstärker 25 der unteren Reihe 23 auszulesen, d.h. es müssen nicht sämtliche Pixel 13 einer Spalte über dieselbe Reihe 21 oder 23 ausgelesen werden. Die Pixel 13 einer Spalte können beispielsweise abwechselnd oder quasi-zufällig nach oben und unten ausgelesen werden, d.h. die Aufschaltzuordnung der Spaltenleitungen 17 auf die beiden Reihen 21, 23 kann von Zeile zu Zeile variiert werden. Die für die jeweilige Zeile verwendete Aufschaltzuordnung kann beispielsweise aus einer Vielzahl von vorgegebenen Aufschaltzuordnungen ausgewählt werden.

Hierdurch kann ein Streifenmuster in einem von dem Bildsensor aufgenommenen Bild vermieden werden, die ansonsten dadurch entstehen, dass im Mittel die Eigenschaften (wie Offsetspannung und Verstärkung) der Spaltenverstärker 25 der ersten Reihe 21 von denen der Spaltenverstärker 25 der zweiten Reihe 23 abweichen. Diese Abweichungen zwischen den auf dem Bildsensor bzw. Chip relativ weit voneinander beabstandeten Reihen 21 und 23 können z.B. durch Abweichungen eines oder mehrerer Prozessparameter bei der Herstellung des Bildsensors verursacht werden. Durch die Verteilung der Pixel 13 einer Spalte beim Auslesen auf die obere Reihe 21 und die untere Reihe 23 wird stattdessen ein Punktemuster erzeugt, das im Vergleich zu einem Streifenmuster vom menschlichen Auge nicht bzw. kaum erkennbar ist, welcher Umstand noch dadurch verstärkt werden kann, wenn das Punktemuster von Bild zu Bild variiert wird.

Um die Ansteuerung bzw. Steuerung der Wechselschalter 29 möglichst einfach zu halten, werden mehrere Spaltenleitungspaare 27, z.B. beispielsweise 4, 8 oder 16 Spaltenleitungspaare, jeweils zu einer Spaltenleitungseinheit 35 zusammengefasst. Innerhalb einer Spaltenleitungseinheit 35 ist für jedes Spaltenleitungspaar 27 frei wählbar, welche Spaltenleitung 17 nach oben zu der ersten Reihe 21 und welche Spaltenleitung 17 nach unten zu der zweiten Reihe 23 geleitet wird. Von Spaltenleitungseinheit 35 zu Spaltenleitungseinheit 35 wird jedoch die gleiche Auswahl verwendet. Hierzu umfasst die Steuereinrichtung 33 mehrere Steuerleitungen 37, die jeweils den ersten Wechselschalter 29-1 oder den zweiten Wechselschalter 29-2 aus einer jeden Spaltenleitungseinheit 35 steuern.

In der nachfolgenden Beschreibung der weiteren erfindungsgemäßen Ausführungsformen des Bildsensors werden jeweils gleiche Bezugszeichen für gleiche oder gleichwirkende Bestandteile verwendet.

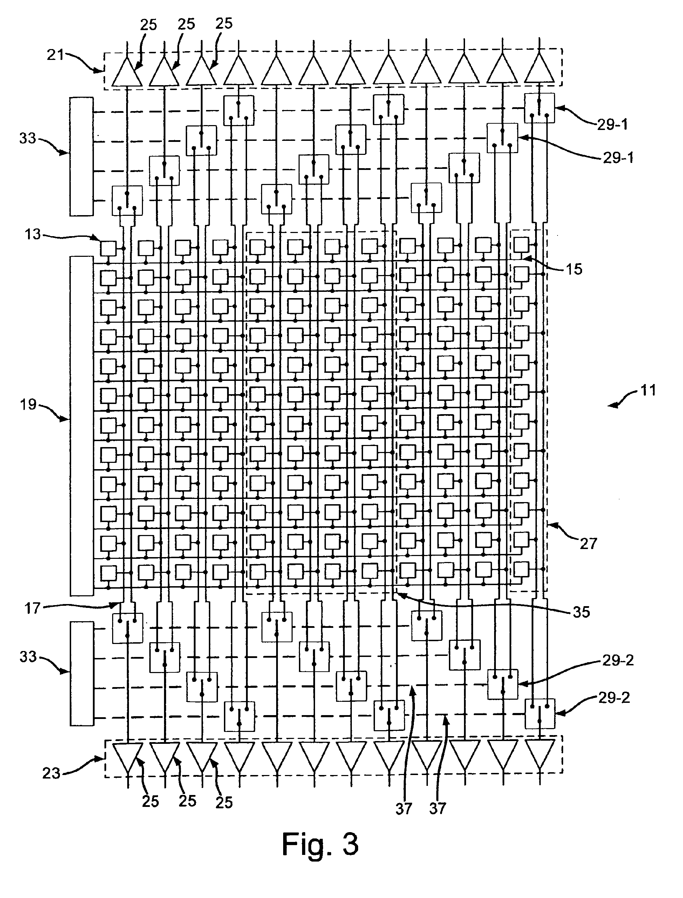

Der in Fig. 3 dargestellte Bildsensor umfasst - anstelle nur einer Spaltenleitung 17 pro Spalte - zwei Spaltenleitungen 17 pro Spalte, die ein jeweiliges Spaltenleitungspaar 27 bilden, dem ein jeweiliger Wechselschalter 29-1, 29-2 zugeordnet ist. Eine Spaltenleitungseinheit 35 wird wiederum von vier Spaltenleitungspaaren 27 gebildet, die im Gegensatz zu dem Bildsensor gemäß Fig. 2 nicht zu acht, sondern nur zu vier Spalten gehören. Jedes Pixel 13 ist - wie auch bei dem in Fig. 2 gezeigten Bildsensor - mit nur einer Spaltenleitung 17 (der beiden Spaltenleitungen 17 einer Spalte) verbunden oder verbindbar, wobei in einer jeweiligen Spalte die Pixel 13 abwechselnd mit der einen und der anderen Spaltenleitung 17 verbunden oder verbindbar sind. Es liegt damit ein Zuordnungsschema AB A-B A-B A-B unmittelbar aufeinander folgender Pixel 13 einer jeweiligen Spalte zu den beiden jeweiligen Spaltenleitungen 17 vor (zyklisch wiederholtes Zuordnungsmuster "A-B"). Gegenüber dem Bildsensor gemäß Fig. 2 besitzt der Bildsensor gemäß Fig. 3 bei ansonsten analogem Aufbau und analoger Betriebsweise den Vorteil, dass nicht nur eine, sondern zwei Zeilen gleichzeitig bzw. gemeinsam ausgelesen werden können, wodurch die Auslesegeschwindigkeit erhöht werden kann.

Abweichend von der Darstellung gemäß Fig. 3 kann auch eine noch höhere Anzahl von Spaltenleitungen 17 pro Spalte von Pixeln 13 vorgesehen sein, beispielsweise vier Spaltenleitungen 17 pro Spalte. In diesem Fall bilden die vier Spaltenleitungen 17 einer jeden Spalte eine jeweilige Spaltenleitungsgruppe 27. Die Pixel 13 einer jeden Spalte können dann nach dem Zuordnungsschema A-B-C-D A-B-C-D mit einer jeweiligen der vier Spaltenleitungen 17 verbunden oder verbindbar sein. Die vier Spaltenleitungen 17 einer jeden Spalte müssen nicht unbedingt dazu verwendet werden, vier Zeilen gleichzeitig auszulesen. Stattdessen ist es auch möglich, über ein erstes Paar von Spaltenleitungen 17 der jeweiligen Spaltenleitungsgruppe 27 zwei Zeilen gleichzeitig auszulesen (gemäß der im Zusammenhang mit Fig. 2 und 3 erläuterten Ansteuerung der Wechselschalter 29) und gleichzeitig an einem weiteren Paar von Spaltenleitungen 17 der jeweiligen Spaltenleitungsgruppe 27 lediglich den nächsten Auslesevorgang vorzubereiten.

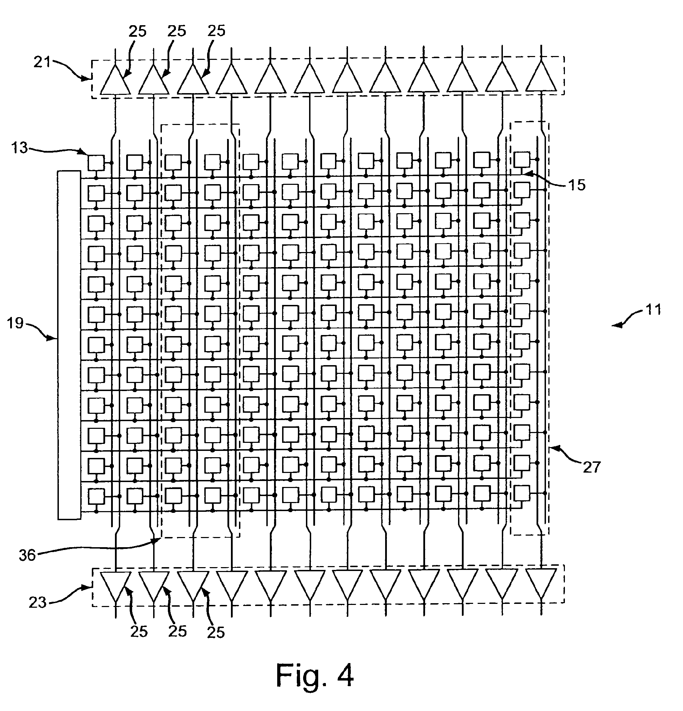

Der in Fig. 4 dargestellte Bildsensor umfasst - wie auch der in Fig. 3 gezeigte Bildsensor - zwei Spaltenleitungen 17 pro Spalte. Allerdings sind keine Wechselschalter und keine Schalteinrichtung vorhanden, sondern eine feste Verdrahtung zwischen den Spaltenleitungen 17 und den Spaltenverstärkern 25, wobei die eine der beiden Spaltenleitungen 17 der jeweiligen Spalte bzw. des jeweiligen Spaltenleitungspaars 27 mit der ersten Spaltenverstärkerreihe 21 und die andere der beiden Spaltenleitungen 17 der jeweiligen Spalte bzw. des jeweiligen Spaltenleitungspaars 27 mit der zweiten Spaltenverstärkerreihe 23 verbunden ist, d.h. eine jeweilige Spaltenleitung 17 (der mehreren Spaltenleitungen) ist lediglich einer der beiden Reihen 21, 23 zugeordnet. Jedes Pixel 13 ist - wie auch bei dem in Fig. 3 gezeigten Bildsensor - mit nur einer Spaltenleitung 17 (der beiden Spaltenleitungen 17 einer Spalte) verbunden. Damit ist die Aufschaltzuordnung der Spaltenleitungen 17 auf die beiden Spaltenverstärkerreihen 21, 23 fest vorgegeben ist. Bei der in Fig. 4 gezeigten Ausführungsform sind die Pixel 13 sowohl einer jeweiligen Spalte als auch einer jeweiligen Zeile alternierend mit der ersten Reihe 21 und der zweiten Reihe 23 verbunden, so dass sich eine Zuordnung der Pixel 13 des Bildfelds 11 zu den beiden Reihen 21, 23 nach Art eines Schachbrettmusters ergibt. Grundsätzlich ist jedoch auch jede andere Zuordnung, insbesondere von Spalte zu Spalte unterschiedlich, möglich. Im Gegensatz zu den vorhergehenden Ausführungsformen ist bei der fest verdrahteten Ausführungsform gemäß Fig. 4 keine Variation der Zuordnung der Spaltenleitungen 17 bzw. der Pixel 13 zu den beiden Verstärkerreihen 21, 23 möglich. Gleichwohl ist analog zu den vorhergehenden Ausführungsformen die Erzeugung eines Punktemusters anstelle eines Streifenmusters möglich.

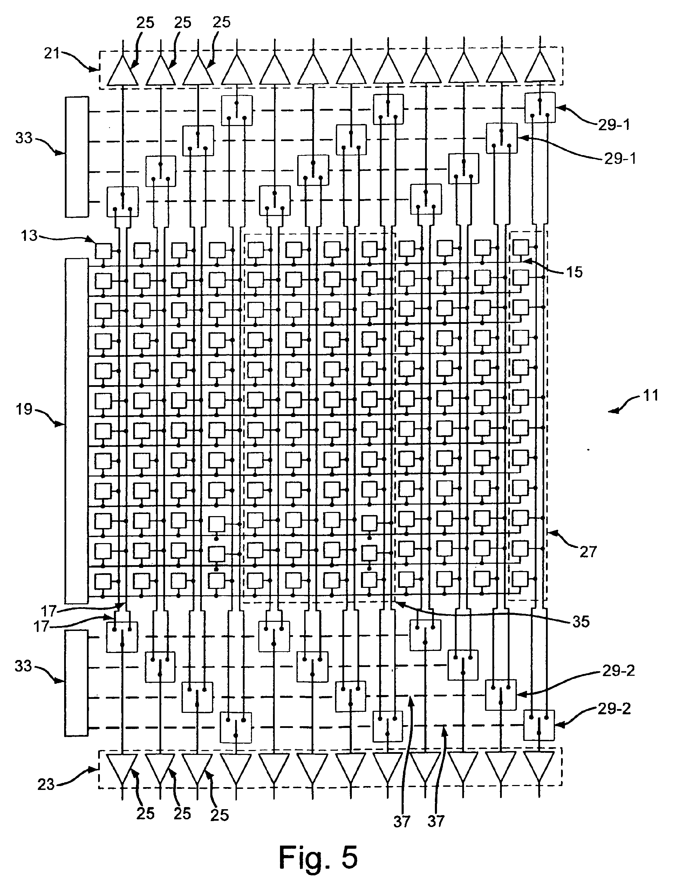

In Fig. 5 ist ein Bildsensor gezeigt, der sich von dem in Fig. 3 dargestellten Bildsensor dadurch unterscheidet, dass in der jeweiligen Spalte die Pixel 13 paarweise abwechselnd mit der einen und der anderen Spaltenleitung 17 verbunden sind, d.h. es liegt ein Zuordnungsschema A-B-B-A A-B-B-A unmittelbar aufeinander folgender Pixel 13 einer jeweiligen Spalte zu den beiden jeweiligen Spaltenleitungen 17 vor (zyklisch wiederholtes Zuordnungsmuster "A-B-B-A"). Hierdurch kann bei einem Farbsensor mit z.B. Bayer-Muster, d.h. bei einem Farbsensor, der bestimmte Farbpixel, z.B. Rot- und Blau-Pixel, jeweils nur in jeder zweiten Zeile und in jeder zweiten Spalte aufweist, bei Ausfall einer Spaltenleitung 17 erreicht werden, dass eine jeweilige Farbe (z.B. rot oder blau) nicht für die gesamte ausgefallene Spalte fehlt, wodurch eine Interpolation der ausgefallenen Farbwerte vereinfacht wird.

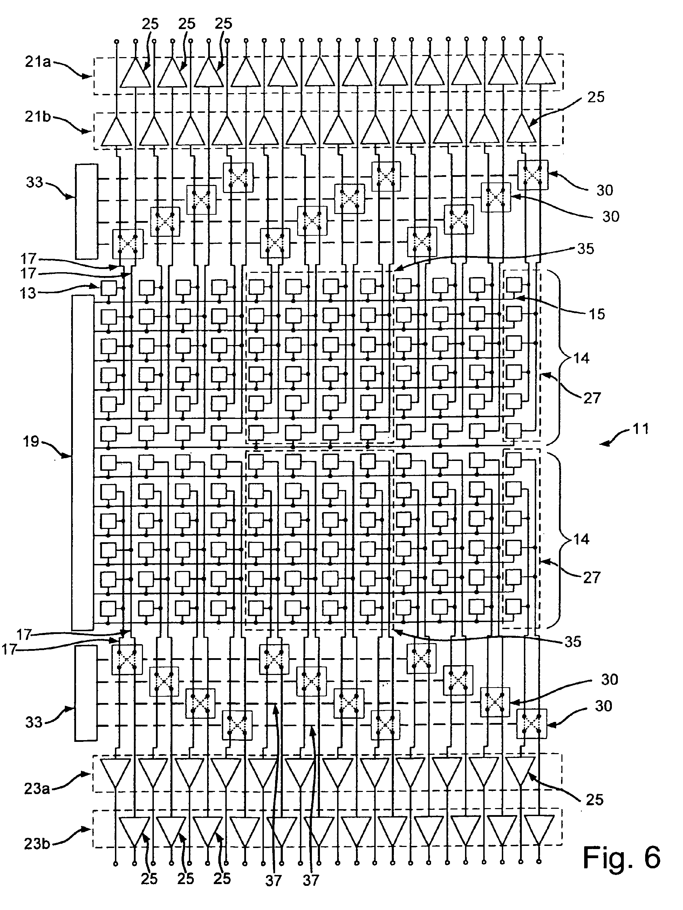

Im Gegensatz zu den Bildsensoren gemäß den Fig. 1 bis 5, die jeweils ein Bildfeld 11 zeigen, das aus einem einzigen Bildfeldblock mit durchgehenden Spaltenleitungen 17 besteht, ist bei dem Bildsensor gemäß Fig. 6 das Bildfeld 11 in zwei Bildfeldblöcke 14, insbesondere zwei Bildfeldhälften, unterteilt bzw. sind die Spaltenleitungen 17 der Spalten, insbesondere in der Mitte des Bildfelds 11, geteilt. An einer ersten (oberen) Seite des Bildfelds 11 und an einer zweiten (unteren) Seite des Bildfelds 11 sind jeweils zwei Reihen 21a, 21b, 23a, 23b von Spaltenverstärkern 25 vorgesehen. Die Pixel 13 einer jeweiligen Spalte sind in eine erste (obere) Pixelgruppe und eine zweite (untere) Pixelgruppe unterteilt, wobei in einer jeweiligen Spalte die Pixel 13 der jeweiligen ersten Pixelgruppe über gemeinsame erste Spaltenleitungen 17 über die an der ersten Seite des Bildfelds 11 angeordneten Reihen 21a, 21b von Spaltenverstärkern 25 und die Pixel 13 der jeweiligen zweiten Pixelgruppe über gemeinsame zweite Spaltenleitungen 17 über die an der zweiten Seite des Bildfelds 11 angeordneten Reihen 23a, 23b von Spaltenverstärkern 25 ausgelesen werden. Die Pixel 13 der ersten Pixelgruppen der Spalten definieren einen ersten (oberen) Bildfeldblock 14 bzw. eine erste (obere) Bildfeldhälfte, die Pixel 13 der zweiten Pixelgruppen der Spalten einen zweiten (unteren) Bildfeldblock 14 bzw. eine zweite (untere) Bildfeldhälfte. Zwischen dem ersten Bildfeldblock 14 und den beiden oberen Reihen 21a, 21b und zwischen dem zweiten Bildfeldblock 14 und den beiden unteren Reihen 23a, 23b sind anstelle von Wechselschaltern Kreuzschalter 30 angeordnet, um die eine der beiden Spaltenleitungen 17 des Spaltenleitungspaar 27 des jeweiligen Bildfeldblocks 14 auf die erste Reihe 21 a bzw. 23a und die andere der beiden Spaltenleitungen 17 auf die zweite Reihe 21b bzw. 23b zu schalten. Durch die Aufteilung des Bildfelds 11 in zwei Bildfeldblöcke 14 kann bei dem Bildsensor gemäß Fig. 6 gegenüber dem Bildsensor gemäß Fig. 5 bei ansonsten analogem Aufbau und analoger Betriebsweise eine noch höhere Bildrate bzw. noch höhere Auslesegeschwindigkeit erreicht werden, da nun nicht nur zwei, sondern vier Zeilen gleichzeitig bzw. gemeinsam ausgelesen werden können.

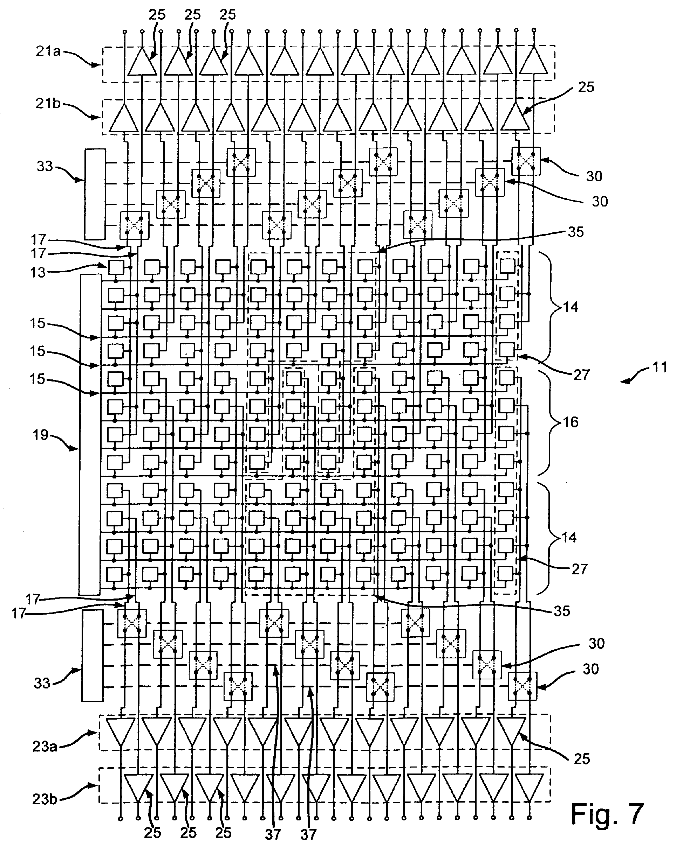

In Fig. 7 ist ein Bildsensor gezeigt, der sich von dem in Fig. 6 dargestellten Bildsensor dadurch unterscheidet, dass die Unterteilung der Pixel 13 in die erste Pixelgruppe und die zweite Pixelgruppe für verschiedene Spalten verschieden ist. Mit anderen Worten variieren die Anzahl der Pixel in der ersten Pixelgruppe und die Anzahl der Pixel in der zweiten Pixelgruppe zwischen den Spalten. Die beiden Bildfeldblöcke 14 greifen fingerartig ineinander bzw. die Teilung der beiden Bildfeldblöcke 14 ist überlappend. Hierdurch kann eine gerade, waagrechte Trennlinie zwischen den beiden Bildfeldblöcken 14, die eine durch die Bildmitte verlaufende Störung aufgrund zweier unterschiedlich heller Bildfeldblöcke 14 verursachen kann, vermieden werden.

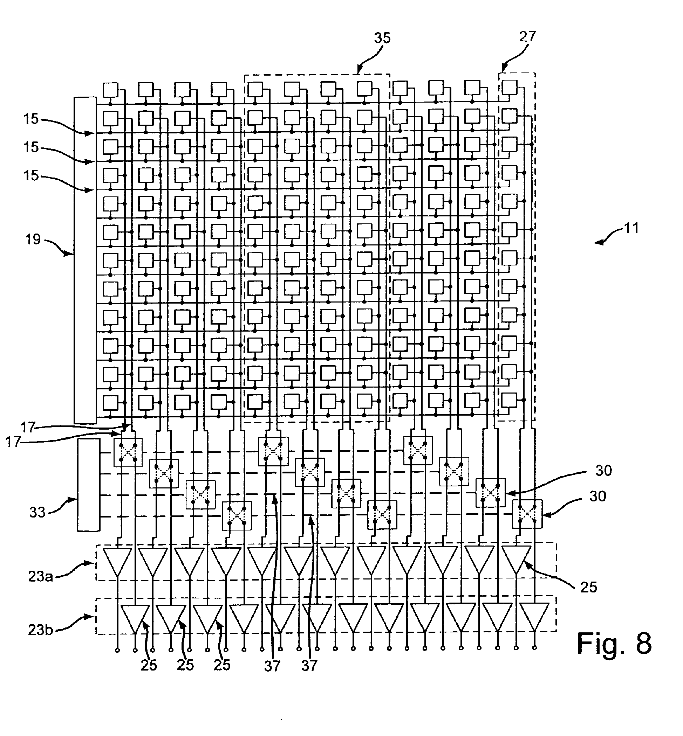

Bei dem Bildsensor gemäß Fig. 8 sind die erste Reihe 23a von Spaltenverstärkern 25 und die zweite Reihe 23b von Spaltenverstärkern 25 auf derselben Seite des Bildfelds 11 angeordnet. Das Bildfeld 11 wird also nur in eine Richtung ausgelesen. Der Betrieb des Bildsensors gemäß Fig. 8 erfolgt entsprechend dem Betrieb des unteren Bildfeldblocks 14 und/oder des oberen Bildfeldblocks 14 des Bildsensors aus Fig. 6.

Grundsätzlich können - wie im Zusammenhang mit Fig. 3 bereits erwähnt - auch mehr als zwei Spaltenleitungen pro Spalte vorgesehen sein, beispielsweise vier Spaltenleitungen pro Spalte. Insbesondere kann eine Spaltenleitungsgruppe beispielsweise vier Spaltenleitungen umfassen. Eine Schalteinrichtung kann dann pro Spalte bzw. Spaltenleitungsgruppe einen oder mehrere zwischen dem Bildfeld und den insbesondere an derselben Seite oder des Bildfelds oder auf gegenüberliegenden Seiten angeordneten Reihen angeordnete Kreuzschalter und/oder Wechselschalter umfassen, um jede der Spaltenleitungen der jeweiligen Spaltenleitungsgruppe auf eine eigene der Reihen von Spaltenverstärkern zu schalten, wobei bevorzugt die Anzahl der Reihen von Spaltenverstärkern der Anzahl der Spaltenleitungen pro Spalte bzw. Spaltenleitungsgruppe entspricht. Es kann an jedem Verstärker ein Kreuzschalter, Wechselschalter und/oder Multiplexer vorgesehen sein, der jede der mehreren, beispielsweise vier Spaltenleitungen auf die mehrere, insbesondere vier Reihen von Spaltenverstärkern verteilt.

Durch die vorliegende Erfindung kann die von einem Auge wahrgenommene Bildqualität eines Bildsensors deutlich erhöht werden.

### Bezugszeichenliste

- 11: Bildfeld
- 13: Pixel
- 14: Bildfeldblock
- 15: Zeilenauswahlleitung
- 17: Spaltenleitung
- 19: Zeilen-Adressierlogik
- 21: Reihe
- 23: Reihe
- 25: Spaltenverstärker
- 27: Spaltenleitungsgruppe/-paar
- 29: Wechselschalter
- 30: Kreuzschalter
- 33: Steuereinrichtung
- 35: Spaltenleitungseinheit
- 37: Steuerleitung

## Patentansprüche

1. Bildsensor, insbesondere CMOS-Bildsensor, für elektronische Kameras,
mit einem Bildfeld (11) mit zumindest einem Bildfeldblock (11, 14), das eine Vielzahl von in Zeilen und Spalten angeordneten lichtempfindlichen Pixeln (13) zur Erzeugung von belichtungsabhängigen Pixelsignalen umfasst, wobei die Pixelsignale der Pixel (13) der jeweiligen Spalte des jeweiligen Bildfeldblocks (11, 14) über eine oder mehrere parallel zueinander verlaufende jeweilige Spaltenleitungen (17) auslesbar sind, und
mit wenigstens einer ersten Reihe (21) von Spaltenverstärkern (25) und einer zweiten Reihe (23) von Spaltenverstärkern (25) für den jeweiligen Bildfeldblock (11, 14),
wobei der Bildsensor dazu ausgebildet ist, die Pixelsignale der Pixel (13) der jeweiligen Spalte des jeweiligen Bildfeldblocks (11, 14) eines Bilds oder zweier aufeinander folgender Bilder teils über die erste Reihe (21; 21a, 23a) und teils über die zweite Reihe (23; 21 b, 23b) von Spaltenverstärkern (25) auszulesen.

2. Bildsensor nach Anspruch 1,
**dadurch gekennzeichnet,**
**dass** eine Schalteinrichtung (29) vorgesehen ist, die dazu ausgebildet ist, zum Auslesen der Pixelsignale der Pixel (13) der jeweiligen Spalte des jeweiligen Bildfeldblocks (11, 14) die jeweilige Spaltenleitung (17) wahlweise auf eine der Reihen (21, 23; 21a, 23a, 21b, 23b), insbesondere die erste Reihe (21; 21a, 23a) oder die zweite Reihe (23; 21b, 23b), zu schalten, wobei zusätzlich eine Steuereinrichtung (33) zum Steuern der Schalteinrichtung (29) vorgesehen ist.

3. Bildsensor nach Anspruch 2,
**dadurch gekennzeichnet,**
**dass** die Steuereinrichtung (33) dazu ausgebildet ist, die Schalteinrichtung (29) derart zu steuern, dass die Aufschaltzuordnung der Spaltenleitungen (17) auf die Reihen (21, 23; 21a, 21b, 23a, 23b) von einer Zeile zur nächsten Zeile variiert, und/oder dass eine Vielzahl von möglichen Aufschaltzuordnungen der Spaltenleitungen (17) auf die Reihen (21, 23; 21a, 21 b, 23a, 23b) vorgegeben ist, aus der die Aufschaltzuordnung für die jeweilige Zeile ausgewählt wird.

4. Bildsensor nach Anspruch 2 oder 3,
**dadurch gekennzeichnet,**
**dass** die Spaltenleitungen (17) in mehrere Spaltenleitungsgruppen (27), insbesondere Spaltenleitungspaare, unterteilt sind, wobei die jeweilige Spaltenleitungsgruppe (27), mehrere insbesondere nebeneinander angeordnete Spaltenleitungen (17) umfasst, wobei jede der Spaltenleitungen (17) der jeweiligen Spaltenleitungsgruppe (27) auf jede der Reihen (21, 23; 21a, 23a, 21b, 23b), insbesondere die erste Reihe (21; 21a, 23b) und die zweite Reihe (23; 21b, 23b), schaltbar ist, und wobei die Steuereinrichtung (33) dazu ausgebildet ist, die Schalteinrichtung (29) derart zu steuern, dass jede der Spaltenleitungen der jeweiligen Spaltenleitungsgruppe auf eine eigene der Reihen (21, 23; 21a, 23a, 21b, 23b), insbesondere die eine der beiden Spaltenleitungen (17) des jeweiligen Spaltenleitungspaars (27) auf die erste Reihe (21; 21a, 23b) und die andere der beiden Spaltenleitungen (17) des jeweiligen Spaltenleitungspaars (27) auf die zweite Reihe (23; 21b, 23b), geschaltet wird.

5. Bildsensor nach Anspruch 4,
**dadurch gekennzeichnet,**
**dass** es sich bei den Spaltenleitungen (17) der jeweiligen Spaltenleitungsgruppe (27), insbesondere des jeweiligen Spaltenleitungspaars, um Spaltenleitungen (17) einer jeweiligen Spalte oder um Spaltenleitungen (17) verschiedener jeweiliger Spalten handelt.

6. Bildsensor nach Anspruch 4 oder 5,
**dadurch gekennzeichnet,**
**dass** die Schalteinrichtung (29) pro Spaltenleitungsgruppe (27), insbesondere Spaltenleitungspaar, einen zwischen dem Bildfeld (11) und der ersten Reihe (21) angeordneten ersten Wechselschalter (29-1) und einen zwischen dem Bildfeld (11) und der zweiten Reihe (23) angeordneten zweiten Wechselschalter (29-2) oder einen zwischen dem Bildfeld (11) und den an derselben Seite des Bildfelds (11) angeordneten Reihen (21a, 23a, 21b, 23b) angeordneten Kreuzschalter (30) umfasst, um jede der Spaltenleitungen der jeweiligen Spaltenleitungsgruppe auf eine eigene der Reihen (21, 23; 21a, 23a, 21b, 23b), insbesondere die eine der beiden Spaltenleitungen (17) des Spaltenleitungspaar (27) auf die erste Reihe (21) und die andere der beiden Spaltenleitungen (17) auf die zweite Reihe (23), zu schalten.

7. Bildsensor nach zumindest einem der Ansprüche 4 bis 6,
**dadurch gekennzeichnet,**
**dass** der jeweiligen Spaltenleitungsgruppe (27), insbesondere dem jeweiligen Spaltenleitungspaar, ein eigener Spaltenverstärker (25) aus einer jeden der Reihen (21, 23; 21a, 23a, 21b, 23b), insbesondere ein eigener Spaltenverstärker (25) aus der ersten Reihe (21; 21a, 23a) und ein eigener Spaltenverstärker (25) aus der zweiten Reihe (23; 21b, 23b), zugeordnet sind.

8. Bildsensor nach zumindest einem der Ansprüche 2 bis 7,
**dadurch gekennzeichnet,**
**dass** die Spaltenleitungen (17) in mehrere Spaltenleitungseinheiten (35) unterteilt sind, wobei die jeweilige Spaltenleitungseinheit (35) mehrere insbesondere nebeneinander angeordnete Spaltenleitungen (17) oder Spaltenleitungsgruppen (27), insbesondere Spaltenleitungspaare, umfasst, wobei insbesondere die innerhalb einer Spaltenleitungseinheit (35) vorliegende Aufschaltzuordnung der Spaltenleitungen (17) auf die Reihen (21, 23; 21a, 21b, 23a, 23b) für die mehreren Spaltenleitungseinheiten (35) identisch ist.

9. Bildsensor nach Anspruch 8,
**dadurch gekennzeichnet,**
**dass** die Steuereinrichtung (33) mehrere Steuerleitungen (37) umfasst, wobei die jeweilige Steuerleitung (37) einer jeweiligen Spaltenleitung (17) oder einer jeweiligen Spaltenleitungsgruppe (27), insbesondere einem jeweiligen Spaltenleitungspaar, aus einer jeden Spaltenleitungseinheit (35) zugeordnet ist.

10. Bildsensor nach zumindest einem der Ansprüche 2 bis 9,
**dadurch gekennzeichnet,**
**dass** die Steuereinrichtung (33) dazu ausgebildet ist, die Schalteinrichtung (29) derart zu steuern, dass die Aufschaltzuordnung der Spaltenleitungen (17) auf die Reihen (21, 23; 21a, 21b, 23a, 23b) von einem Bild zum nächsten Bild variiert.

11. Bildsensor nach Anspruch 1,
**dadurch gekennzeichnet,**
**dass** bei mehreren Spaltenleitungen (17) einer jeweiligen Spalte die Aufschaltzuordnung der Spaltenleitungen (17) auf die Reihen (21, 23; 21a, 2 1 b, 23a, 23b) fest vorgegeben ist, wobei die Pixel (13) der jeweiligen Spalte zufällig, quasi-zufällig oder alternierend den Reihen (21, 23; 21a, 21b, 23a, 23b) zugeordnet sind;
wobei die Spaltenleitungen (17) vorzugsweise in mehrere Spaltenleitungsgruppen (27), insbesondere Spaltenleitungspaare, unterteilt sind, wobei es sich bei den Spaltenleitungen (17) der jeweiligen Spaltenleitungsgruppe (27) um Spaltenleitungen (17) einer jeweiligen Spalte handelt, und wobei die Aufschaltzuordnung der Spaltenleitungen (17) auf die Reihen (21, 23; 21a, 21b, 23a, 23b) von einer Spaltenleitungsgruppe (27) zur nächsten Spaltenleitungsgruppe (27) und/oder von einer Spalte zur nächsten Spalte variiert, insbesondere invertiert ist.

12. Bildsensor nach zumindest einem der vorstehenden Ansprüche,
**dadurch gekennzeichnet,**
**dass** die Anzahl der Spaltenverstärker (25) der Anzahl der Spaltenleitungen (17) entspricht und/oder für die Reihen die Anzahl der Spaltenverstärker (25) in den Reihen (21, 23; 21a, 21b, 23a, 23b) identisch ist, insbesondere die Anzahl der Spaltenverstärker (25) in der ersten Reihe (21; 21a, 23a) der Anzahl der Spaltenverstärker (25) in der zweiten Reihe (23; 21b, 23b) entspricht,
und/oder.
**dass** bei einem Bildsensor, der für die jeweilige Spalte des jeweiligen Bildfeldblocks (11, 14) mehrere parallel zueinander verlaufende Spaltenleitungen (17) aufweist, das jeweilige Pixel (13) der jeweiligen Spalte des jeweiligen Bildfeldblocks (11, 14) lediglich mit einer der mehreren Spaltenleitungen (17) verbunden bzw. verbindbar ist, wobei insbesondere in einer jeweiligen Spalte eines jeweiligen Bildfeldblocks (11, 14) unmittelbar aufeinanderfolgende Pixel (13) paarweise abwechselnd mit den mehreren Spaltenleitungen (17) verbunden bzw. verbindbar sind.

13. Bildsensor nach zumindest einem der vorstehenden Ansprüche,
**dadurch gekennzeichnet,**
**dass** das Bildfeld (11) einen einzigen Bildfeldblock umfasst, wobei die erste Reihe (21) von Spaltenverstärkern (25) und die zweite Reihe (23) von Spaltenverstärkern (25) auf gegenüberliegenden Seiten des Bildfelds (11) angeordnet sind, wobei der Bildsensor für jede Spalte von Pixeln (13) mehrere Spaltenleitungen (17) aufweist, wobei ein jedes Pixel (13) der jeweiligen Spalte lediglich mit einer der mehreren Spaltenleitungen (17) verbunden oder verbindbar ist, und wobei der Bildsensor eine Schalteinrichtung (29) aufweist, die dazu ausgebildet ist, zum Auslesen der Pixelsignale der Pixel (13) einer jeweiligen Spalte die jeweilige Spaltenleitung (17) wahlweise auf die erste Reihe (21) oder die zweite Reihe (23) von Spaltenverstärkern (25) zu schalten.

14. Bildsensor nach Anspruch 13,
**dadurch gekennzeichnet,**
**dass** die Spaltenleitungen (17) in mehrere Spaltenleitungseinheiten (35) unterteilt sind, wobei die jeweilige Spaltenleitungseinheit (35) die Spaltenleitungen (17) mehrerer Spalten von Pixeln (13) umfasst, wobei die Steuereinrichtung (33) dazu ausgebildet ist, für jede Spaltenleitungseinheit (35) eine Aufschaltzuordnung vorzusehen, gemäß welcher die Spaltenleitungen (17) der jeweiligen Spaltenleitungseinheit (35) wahlweise auf die erste Reihe (21) oder die zweite Reihe (23) von Spaltenverstärkern (25) schaltbar sind.

15. Bildsensor nach Anspruch 14,
**dadurch gekennzeichnet,**
**dass** die Aufschaltzuordnungen der mehreren Spaltenleitungseinheiten (35) identisch sind;
und/oder
**dass** die Steuereinrichtung (33) dazu ausgebildet ist, die Schalteinrichtung (29) derart zu steuern, dass die Aufschaltzuordnung der Spaltenleitungen (17) auf die Reihen (21, 23; 21a, 21b, 23a, 23b) von Spaltenverstärkern (25) von einem Bild zum nächsten Bild und/oder von einer Zeile zur nächsten Zeile von Pixeln (13) variiert; und/oder
**dass** die Steuereinrichtung (33) mehrere Steuerleitungen (37) umfasst, wobei eine jede Steuerleitung (37) einer jeweiligen Spaltenleitung (17) einer jeden Spaltenleitungseinheit (35) oder einer jeweiligen Gruppe (27) von Spaltenleitungen (17) einer jeden Spaltenleitungseinheit (35) zugeordnet ist, wobei die Schalteinrichtung (29) vorzugsweise eine Vielzahl von Wechselschaltern (29-1, 29-2) aufweist, wobei jeder Spaltenleitungseinheit (35) mehrere Wechselschalter (29-1, 29-2) zugeordnet sind, um eine jeweilige Spaltenleitung (17) der jeweiligen Spaltenleitungseinheit (35) wahlweise auf die erste Reihe (21) oder die zweite Reihe (23) von Spaltenverstärkern (25) zu schalten, und wobei jede Steuerleitung mit einem jeweiligen Wechselschalter (29-1, 29-2) einer jeden Spaltenleitungseinheit (35) verbunden ist, um den jeweiligen Wechselschalter (29-1, 29-2) zu steuern.

16. Verfahren zum Auslesen eines Bildsensors, insbesondere eines CMOS-Bildsensors, für elektronische Kameras, wobei der Bildsensor ein Bildfeld mit zumindest einem Bildfeldblock, das eine Vielzahl von in Zeilen und Spalten angeordneten lichtempfindlichen Pixeln zur Erzeugung von belichtungsabhängigen Pixelsignalen umfasst, und wenigstens eine erste Reihe von Spaltenverstärkern und eine zweite Reihe von Spaltenverstärkern für den jeweiligen Bildfeldblock aufweist, wobei die Pixelsignale der Pixel der jeweiligen Spalte des jeweiligen Bildfeldblocks über eine oder mehrere parallel zueinander verlaufende jeweilige Spaltenleitungen ausgelesen werden, und wobei die Pixelsignale der Pixel der jeweiligen Spalte des jeweiligen Bildfeldblocks eines Bilds oder zweier aufeinander folgender Bilder teils über die erste Reihe und teils über die zweite Reihe ausgelesen werden.
